# EUROPÄISCHE PATENTSCHRIFT

(11) **EP 0 499 698 B1**
(45) Veröffentlichungstag und Bekanntmachung des Hinweises auf die Patenterteilung: **22.01.1997**
(21) Anmeldenummer: 91120254.7
(22) Anmeldetag: 27.11.1991
(51) Int. Cl.: F16D 47/06, F16D 35/02, F16D 35/00, F01P 5/04, F04D 19/02, F04D 25/02

(54) **Lüfterantrieb mit Flüssigkeitsreibungskupplung**
Ventilator drive with fluid friction coupling
Entraînement de ventilateur avec accouplement à frottement visqueux

(30) Priorität: 22.12.1990 DE 4041568
(43) Veröffentlichungstag der Anmeldung: 26.08.1992
(73) Patentinhaber: Behr GmbH & Co., D-70469 Stuttgart (DE)
(72) Erfinder: Martin, Hans, Dipl.-Ing., W-7000 Stuttgart 1 (DE)

(56) Entgegenhaltungen:
- EP-A- 0 129 685
- EP-A- 0 379 036
- DE-A- 3 612 167
- FR-A- 1 454 720
- GB-A- 587 529
- US-A- 4 064 980

## Beschreibung

Die Erfindung bezieht sich auf einen Lüfterantrieb mit Flüssigkeitsreibungskupplung entsprechend dem Oberbegriff des Patentanspruches 1 - derartige Lüfterantriebe sind bekannt, z.B. durch die DE-C 28 14 608.

Bei derartigen Lüfterantrieben besteht der Nachteil, daß diese Lüfter bei niedrigen Motordrehzahlen zu wenig Luft fördern, obwohl in derartigen Betriebssituationen häufig mehr Luft zur Kühlung benötigt wird, insbesondere, wenn zusätzlich zum Kühlmittelkühler noch ein Kondensator einer Klimaanlage oder ein Ölkühler mit Kühlluft zu versorgen ist.

Der Erfindung liegt daher die Aufgabe zugrunde, einen Lüfterantrieb zu schaffen, der insbesondere bei niedrigen Motordrehzahlen einen erhöhten Luftdurchsatz zur Verfügung stellen kann. Diese Aufgabe wird durch die kennzeichnenden Merkmale in Verbindung mit denen des Oberbegriffes des Patentanspruches 1 gelöst. Der hinter dem ersten Lüfter angeordnete zweite Lüfter, der sog. Gegenläufer, kann also bedarfsweise, d.h. insbesondere bei niedrigen Motordrehzahlen oder in Abhängigkeit von anderen Parametern zugeschaltet werden, d.h. er läuft dann mit entgegengesetzter Umfangsgeschwindigkeit wie der erste Lüfter um und sorgt damit für einen erhöhten Luftdurchsatz, ohne daß die Motordrehzahl angehoben werden muß. Dies ist ein erheblicher Vorteil, gerade bei Kraftfahrzeugen, bei welchen die Motordrehzahl nicht beliebig variiert werden kann. Durch den erfindungsgemäßen Lüfterantrieb ist es somit möglich, ein Kraftfahrzeug, dessen Motor mit Leerlaufdrehzahl oder mit relativ niedriger Drehzahl umläuft, hinreichend mit Kühllüft zu versorgen und dabei auch den Kondensator hinreichend zu kühlen, ohne daß zusätzliche Elektrolüfter benötigt werden.

Gemäß Anspruch 2 ergibt sich ein besonders hoher Druckgewinn, wenn der Gegenläufer mit etwa gleicher Drehzahl wie der des ersten Lüfters umläuft, wobei das Übersetzungsverhältnis in Abhängigkeit von der Geräuschbildung gewählt werden kann.

Gemäß Anspruch 3 ist der Gegenläufer mit seiner Nabe auf der Nabe der Flüssigkeitsreibungskupplung koaxial gelagert, was eine axial besonders kurze Bauweise ergibt.

Gemäß Anspruch 4 ist der Gegenläufer über ein Zahnradgetriebe zuschaltbar, wodurch ein definiertes Drehzahlverhältnis zwischen beiden Lüftern gewährleistet ist.

Gemäß Anspruch 5 ist dieses Zahnradgetriebe als Planetengetriebe ausgebildet, was eine raumsparende und koaxial gedrängte Bauweise ermöglicht und eine Unter- und Übersetzung zuläßt, welche durch einfach oder doppelt verzahnte Planetenräder möglich wird.

Gemäß Anspruch 6 ist die zweite Kupplung als Elektromagnetbremse ausgebildet, d.h. der Steg des Planetengetriebes weist eine Scheibenfläche auf, die als Bremsfläche dient und über die Elektromagnetbremse festgesetzt werden kann.

Gemäß Anspruch 7 ist das Getriebe als Riementrieb ausgebildet, und zwar vorzugsweise als Keilriementrieb oder Zahnriementrieb, wobei je ein Riementrieb mit dem ersten und dem zweiten Lüfter verbunden sind und beide Riementriebe über eine Kupplung starr miteinander verbunden werden können. Ein solcher Riementrieb baut relativ leicht und ist einfach, d.h. wirtschaftlich herstellbar.

Gemäß Anspruch Anspruch 8 ist die Schaltkupplung innerhalb einer Riemenscheibe angeordnet, so daß hierdurch kaum zusätzlicher Bauraum benötigt wird - gleichzeitig können beide Riementriebe einfach gekuppelt werden.

Gemäß Anspruch 9 sind weitere Riemenscheiben vorgesehen, insbesondere eine außerhalb des ersten Riementriebes angeordnete Riemenscheibe, die für eine Drehrichtungsumkehr vom ersten auf den zweiten Riementrieb sorgt, weil der erste Riementrieb diese Riemenscheibe mit seiner Außenseite antreibt. Für diese Art der Drehrichtungsumkehr ist infolge des relativ geringen Umschlingungswinkels ein Zahnriementrieb besonders geeignet.

Gemäß Anspruch 10 ist im Nabenbereich des zweiten Lüfters eine weitere Flüssigkeitsreibungskupplung vorgesehen, die nicht durch äußere Parameter geregelt ist, sondern sich selbst durch Drehmomentbegrenzung abregelt. Diese Art von Flüssigkeitsreibungskupplung ist an sich bekannt; sie hat hier den Vorteil, daß sich der Gegenläufer bei hohen Lüfterdrehzahlen selbständig abregelt und damit Geräuschspitzen vermeidet.

Zwei Ausführungsbeispiele der Erfindung sind in der Zeichnung dargestellt und werden im folgenden näher beschrieben:
- **Fig. 1**: zeigt ein erstes Ausführungsbeispiel mit Planetengetriebe,
- **Fig. 2**: zeigt ein zweites Ausführungsbeispiel mit Keilriementrieb,
- **Fig. 3**: einen Schnitt gemäß Linie III - III in Fig. 2, und
- **Fig. 4**: zeigt den Gegenläufer, angetrieben von einer weiteren Flüssigkeitsreibungskupplung.

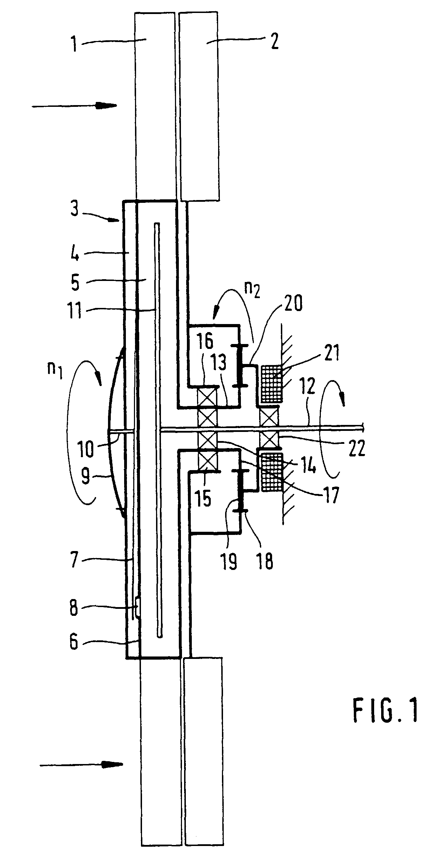

In **Fig. 1** ist schematisch eine an sich bekannte Flüssigkeitsreibungskupplung 3 dargestellt, die auf ihrem Umfang einen Axiallüfter 1 mit an sich bekannter Axialbeschaufelung trägt. Diese Flüssigkeitsreibungskupplung weist in bekannter Art eine Vorratskammer 4 und eine Arbeitskammer 5 auf, die durch eine Trennwand 6 voneiander abgeteilt sind, aber über eine Ventilbohrung 8, die von einem Ventilhebel 7 gesteuert wird, miteinander in Verbindung stehen. Hier ist der Ventilhebel 7 über ein auf der Kupplungsaußenseite angeordnetes Bimetall 9 über einen Schaltstift 10 gesteuert. In der Arbeitskammer 5 ist eine Antriebsscheibe 11 angeordnet, die mit der Antriebswelle 12 verbunden ist. Die Flüssigkeitsreibungskupplung ist mit einem viskosen Medium gefüllt, welches zwischen Vorrats- und Arbeitskammer zirkuliert und damit das übertragbare Drehmoment bzw. die Drehzahl des Lüfters 1 bestimmt. Das Gehäuse der Kupplung 3 ist mit seiner Nabe 13 über ein Kugellager 14 auf der Antriebswelle 12 drehbar gelagert. Auf der Außenseite der Nabe 13 ist ein weiteres Kugellager 15 angeordnet, welches über eine Nabe 16 einen zweiten Axiallüfter 2 trägt, den sog. Gegenläufer. Die Beschaufelung dieses Gegenläufers 2 ist in entgegengesetzter Richtung wie die des ersten Lüfters 1 angeordnet, so daß sich in an sich bekannter Weise eine Umlenkung (Reaktion) der Axialströmung ergibt. Lüfter 1 und Gegenläufer 2 können über die Kupplung 21 und ein Planetengetriebe, welches im folgenden beschrieben wird, miteinander verbunden werden. Die Nabe 13 des Kupplungsgehäuses 3 trägt eine mit Außenverzahnung versehene Innensonne 17, die mit einem Satz Planetenräder 19 in Eingriff steht, welche von dem Planetenträger 20 getragen werden. Diese Planetenräder 19 stehen andererseits in Eingriff mit einer Außensonne 18 mit Innenverzahnung, welche im Nabenbereich 16 des Gegenläufers 2 angeordnet ist. Der Planetenträger 20, der getriebetechnisch als sog. Steg ausgebildet ist, ist über ein weiteres Kugellager 22 koaxial zur Antriebswelle 12 gelagert und kann - wenn nämlich der Gegenläufer zugeschaltet werden soll - über die Elektromagnetkupplung bzw. -Bremse 21 festgesetzt werden. Dann ist nämlich aus dem Planeten- oder Umlaufgetriebe ein sog. Standgetriebe geworden, was zur Folge hat, daß die Innensonne 17 über die Planetenräder 19 auf die Außensonne 18 treibt und somit den Gegenläufer 2 in entgegengesetzter Richtung und mit etwa gleicher Drehzahl mitnimmt. Soll der Gegenläufer 2 nicht mitlaufen, so wird die Kupplung 21 gelöst, und der Steg bzw. Planetenträger 20 läuft mit seinen Planetenrädern 19 um. Dabei stellt sich in bekannter Weise ein Momentengleichgewicht zwischen antreibender Innensonne 17 und abgetriebener Außensonne 18 ein, was weiterhin zur Folge hat, daß der Gegenläufer 2 lediglich im "Windmühlenbetrieb'' mittrudelt.

Die Funktionsweise dieses Lüfterantriebes ist also die folgende: Wird lediglich ein "normaler'' Luftdurchsatz für den Kühler bzw. das Kühlmodul (einschließlich Kondensator, Ladeluftkühler etc.) gefordert, der durch die Betriebsdrehzahl der Brennkraftmaschine zur Verfügung gestellt werden kann, ist der Gegenläufer 2 abgekuppelt, d.h. er steht in keinem festen Drehzahlverhältnis zum ersten Lüfter 1, sondern läuft lediglich in der axialen Nachlaufströmung des Lüfters 1 lose mit um. Dadurch werden keine Durchsatzverluste an Kühlluft bewirkt. Wird jedoch mehr Kühlluft, insbesondere bei niedriger Motordrehzahl benötigt, so wird der Gegenläufer 2 über die Kupplung 21 durch Festsetzen der Stegwelle 20 zugeschaltet. Er wird dann also mit der Drehzahl n₁ des ersten Lüfters 1 angetrieben und durch das Planetengetriebe in entgegengesetzter Richtung und mit etwa gleicher Drehzahl n₂ abgetrieben. Dadurch ergibt sich eine erhebliche Drucksteigerung in Bezug auf den Eintritt der Luftströmung am ersten Lüfter 1 und den Austritt am Gegenläufer 2, d.h. ein erhöhter Luftdurchsatz.

Die Planetenräder 19 können auch (was nicht dargestellt ist) zweistufig ausgebildet sein, d.h. zwei Verzahnungen aufweisen, wobei die eine mit der Innensonne und die andere mit der Außensonne kämmt. Damit wird eine Übersetzung ins Schnelle erreicht.

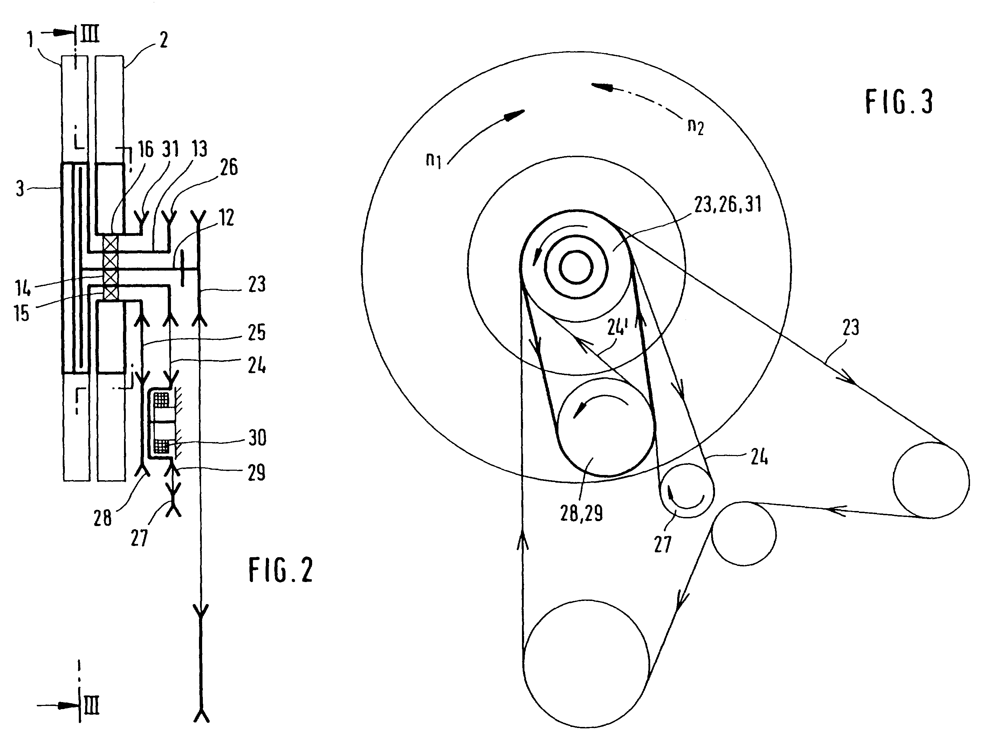

In den **Fig. 2 und 3** ist ein weiteres Ausführungsbeispiel der Erfindung, und zwar mit einem Riementrieb dargestellt, wobei für die Kupplung, den ersten und den zweiten Lüfter zum Teil bei gleichen bzw. funktionsgleichen Teilen dieselben Bezugsziffern verwendet wurden. Fig. 2 zeigt einen Axialschnitt durch den Lüfterantrieb und Fig. 3 eine Ansicht gemäß Schnitt III -III. Der erste Lüfter 1 ist also wiederum auf der Flüssigkeitsreibungskupplung 3 angeordnet, die über eine Antriebswelle 12 vom Motor her, d.h. über einen Riementrieb 23 angetrieben wird. Die Kupplung 3 ist mittels ihrer Nabe 13 über ein Kugellager 14 koaxial zur Antriebswelle 12 gelagert, und der Gegenläufer 2 ist mit seiner Nabe 16 und ein Kugellager 15 ebenfalls koaxial gegenüber der Antriebswelle 12 gelagert. Die Nabe 13 der Kupplung 3 ist dabei axial etwas weiter in die Ebene eines ersten Riementriebes 24 hinausgeführt, während die Nabe 16 des Gegenläufers 2 axial versetzt bis in die Ebene eines zweiten Riementriebes 25 hinausgezogen ist. Am Ende der Nabe 13 ist eine erste Riemenscheibe 26 und am Ende der Nabe 16 eine weitere Riemenscheibe 31 drehfest angeordnet. Die mit dem ersten Lüfter 1 verbundene erste Riemenscheibe 26 treibt über einen Riementrieb 24 und eine Umlenkrolle 27 eine Riemenscheibe 29. Die weitere Riemenscheibe 31, die mit dem Gegenläufer 2 verbunden ist, wird über den zweiten Riementrieb 25 von der Riemenscheibe 28 angetrieben. Insofern sind die beiden Riementriebe 24 und 25 axial gegeneinander versetzt und getrennt. Über eine koaxial zur Riemenscheibe 28 angeordnete Magnetkupplung 30 in der Riemenscheibe 29 können jedoch beide Riementriebe 24 und 25 miteinander in Eingriff gebracht werden, wobei aufgrund der speziellen Riemenanordnung, wie sie aus Fig. 3 hervorgeht, eine Drehrichtungsumkehr vom Zugtrum 24' auf die mit dem erforderlichen Winkel umschlungene Riemenscheibe 29, in welcher sich die ortsfeste Magnetkupplung 30 befindet, erfolgt - dies geht auch aus den Pfeilen in Fig. 3 deutlich hervor.

Die Funktionsweise ist dieselbe, wie für das Ausführungsbeispiel in Fig. 1 ausgeführt, d.h. entweder läuft der Gegenläufer 2 im nicht zugeschalteten Zustand lose mit, oder er ist durch die Kupplung 30 zugeschaltet und läuft gegensinnig und mit etwa gleicher Drehzahl (n₂) zum ersten Lüfter (n₁) mit um, was zu dem bereits erwähnten Druckanstieg, insbesondere bei niedrigen Antriebsdrehzahlen führt.

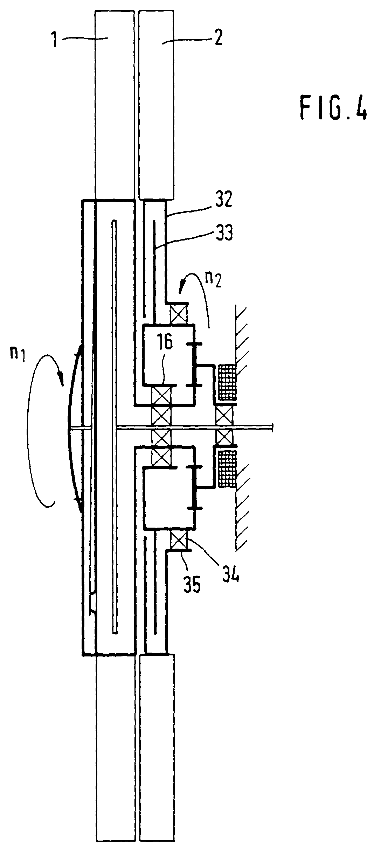

**Fig. 4** zeigt eine vorteilhafte Weiterbildung der Erfindung, und zwar in der Weise, daß der Gegenläufer 2 durch eine drehmomentbegrenzte Flüssigkeitsreibungskupplung angetrieben wird. Diese Weiterbildung entspricht dem Ausführungsbeispiel in Fig. 1, wo der Gegenläufer 2 starr von der Außensonne 18 angetrieben wird. Hier ist die Außensonne mit einer Antriebsscheibe 33 verbunden, die in einer Arbeitskammer 32 einer Flüssigkeitsreibungskupplung umläuft, während diese Arbeitskammer 32, die gleichzeitig das Kupplungsgehäuse bildet, über einen Nabenbereich 35 und ein weiteres Kugellager 34 auf der Nabe 16 gelagert ist. Die Arbeitskammer 32 ist in bekannter Weise mit einem viskosen Medium gefüllt, so daß sich zwischen der Antriebsscheibe 33 und dem Kupplungsgehäuse 32 ein bestimmter Schlupf einstellt. Wenn die Antriebsdrehzahl dieser drehmomentbegrenzten Flüssigkeitsreibungskupplung, d.h. die der Antriebsscheibe 33 zu hoch wird, regelt sich diese Kupplung von selbst ab, d.h. die Drehzahl n₂ des Gegenläufers steigt nicht weiter an, weil das vom Lüfter aufgenommene Moment im Gleichgewicht mit dem maximal übertragbaren Moment in der Flüssigkeitsreibungskupplung steht. Diese Maßnahme hat den Vorteil, daß zu hohe Drehzahlen des Gegenläufers 2 und damit von diesem verursachte Geräuschspitzen vermieden werden können.

## Patentansprüche

1. Lüfterantrieb mit Flüssigkeitsreibungskupplung, bestehend aus einem Kupplungsgehäuse (3) mit Arbeitskammer (5) und Vorratskammer (4), zwischen denen ein viskoses Medium zirkuliert sowie einer in der Arbeitskammer (5) umlaufenden Antriebsscheibe (11), die mit einer Antriebswelle (12) verbunden ist und einem mit dem Gehäuse (3) verbundenen Lüfter (1), **dadurch gekennzeichnet,** daß in Strömungsrichtung hinter dem Lüfter (1) ein zweiter Lüfter (2) mit gegensinniger Beschaufelung angeordnet und koaxial zur Antriebswelle (12) gelagert und über eine weitere Kupplung (21) und ein Getriebe (20) in der Weise zuschaltbar ist, daß der zweite Lüfter (2) in Bezug auf den ersten Lüfter (1) in entgegengesetzter Drehrichtung umläuft.

2. Lüfterantrieb nach Anspruch 1, **dadurch gekennzeichnet,** daß die Lüfter (1, 2) als Axiallüfter ausgebildet sind und daß das Drehzahlverhältnis vom zweiten und ersten Lüfter i_{2/1} = n₂ : n₁ ≈ 1 ist.

3. Lüfterantrieb nach Anspruch 1 oder 2, **dadurch gekennzeichnet,** daß das Gehäuse (3) der Flüssigkeitsreibungskupplung eine Nabe (13) und daß der zweite Lüfter (2) eine Nabe (16) aufweisen, welche auf der Nabe (13) drehbar gelagert ist.

4. Lüfterantrieb nach Anspruch 1, 2 oder 3, **dadurch gekennzeichnet,** daß der zweite Lüfter (2) über ein Zahnradgetriebe zuschaltbar ist.

5. Lüfterantrieb nach Anspruch 4, **dadurch gekennzeichnet,** daß das Zahnradgetriebe als Planetengetriebe ausgebildet ist, wobei am Kupplungsgehäuse (3, 13) der Flüssigkeitsreibungskupplung eine Innensonne (17) und an der Nabe (16) des zweiten Lüfters (2) eine Außensonne (18) mit Innenverzahnung angeordnet sind, welche über Planetenräder (19) miteinander in Eingriff stehen, die auf einem Planetenträger (20) angeordnet sind, welcher koaxial und drehbar zur Antriebswelle (12) gelagert und über die zweite Kupplung (21) abbremsbar ist.

6. Lüfterantrieb nach Anspruch 5, **dadurch gekennzeichnet,** daß die zweite Kupplung (21) als Elektromagnetbremse ausgebildet ist, die sich fahrzeugseitig abstützt.

7. Lüfterantrieb nach Anspruch 1, 2 oder 3, **dadurch gekennzeichnet,** daß das Getriebe als Riementrieb, vorzugsweise Keil- oder Zahnriementrieb, ausgebildet ist, der zwei axial gegeneinander versetzte Riementriebe (24,25) umfaßt, von dem der erste (24) mit dem ersten Lüfter (1) über eine Riemenscheibe (26) und der zweite (25) mit dem zweiten Lüfter (2) ebenfalls über eine Riemenscheibe (31) verbunden ist, und die miteinander über eine Schaltkupplung (30) verbindbar sind.

8. Lüfterantrieb nach Anspruch 7, **dadurch gekennzeichnet,** daß die Schaltkupplung (30) als Elektromagnetkupplung innerhalb einer Riemenscheibe (29) des ersten Riementriebes (24) ausgebildet ist.

9. Lüfterantrieb nach Anspruch 7 oder 8, **dadurch gekennzeichnet,** daß der erste Riementrieb (24) über eine Umlenkrolle (27) an eine außerhalb des ersten Riementriebes (24) angeordnete Riemenscheibe (29) treibt, die koaxial zur einer weiteren Riemenscheibe (28) des zweiten Riementriebes (25) angeordnet und mit dieser durch die Schaltkupplung (30) verbindbar ist.

10. Lüfterantrieb nach einem der vorhergehenden Ansprüche, **dadurch gekennzeichnet,** daß der zweite Lüfter (2) über eine drehmomentbegrenzte Flüssigkeitsreibungskupplung (32, 33) angetrieben wird, deren Antriebsglied (33) mit der getriebseitigen Nabe (16) und deren Abtriebsglied (32) mit der lüfterseitigen Nabe (35) verbunden sind.

## Claims

1. Fan drive with viscuous fluid coupling, consisting of a coupling casing (3) with an operating chamber (5) and a storage chamber (4), between which a viscous medium circulates, and a drive disc (11) which rotates in the operating chamber (5) and which is connected to a drive shaft (12), and a fan (1) which is connected to the casing (3), characterised in that a second fan (2) is disposed behind the fan (1) in the flow direction, which second fan is equipped with blades in the opposite sense and is disposed coaxially to the drive shaft (12) and can be engaged via a further coupling (21) and a drive (20) in such a manner that the second fan (2) rotates in a sense of rotation which is opposite to that of the first fan (1).

2. Fan drive according to Claim 1, characterised in that the fans (1, 2) are formed as axial fans and that the rotational speed ratio of the second and first fans i_{2/1} = n₂: n₁ ≈ 1.

3. Fan drive according to Claim 1 or Claim 2, characterised in that the casing (3) of the viscuous fluid coupling has a hub (13); and in that the second fan (2) has a hub (16) which is mounted in a rotatable manner on the hub (13).

4. Fan drive according to Claim 1, 2 or 3, characterised in that the second fan (2) can be engaged via a toothed wheel gear.

5. Fan drive according to Claim 4, characterised in that the toothed wheel gear is formed as a planetary gear, wherein a sun wheel (17) is disposed on the coupling casing (3, 13) of the viscuous fluid coupling and an annulus (18) is disposed on the hub (16) of the second fan (2), these being in engagement with one another via planetary wheels (19) which are disposed on a planetary carrier (20), which is mounted coaxially and rotatably in relation to the drive shaft (12) and can be braked via the second coupling (21).

6. Fan drive according to Claim 5, characterised in that the second coupling (21) is formed as an electromagnetic brake which is supported on the vehicle side.

7. Fan drive according to Claim 1, 2 or 3, characterised in that the drive is formed as a belt drive, preferably a cone belt drive or a toothed belt drive which has two belt drives (24, 25) which are offset axially in respect of one another, the first (24) of which is connected to the first fan (1) via a pulley (26) and the second (25) of which is likewise connected to the second fan (2) via a pulley (31), and which can be connected to one another via an engaging coupling (30).

8. Fan drive according to Claim 7, characterised in that the engaging coupling (30) is formed as an electromagnetic coupling within a pulley (29) of the first belt drive (24).

9. Fan drive according to Claim 7 or 8, characterised in that the first belt drive (24) drives, via a deflector roller (27), a pulley (29) which is disposed outside the first belt drive (24) and is disposed coaxial to a further pulley (28) of the second belt drive (25) and can be connected thereto by means of the engaging coupling (30).

10. Fan drive according to one of the preceding claims, characterised in that the second fan (2) is driven by means of a limited rotational torque viscuous fluid coupling (32, 33), the drive member (33) of which is connected to the drive side hub (16) and the driven member (32) of which is connected to the fan side hub (35).

## Revendications

1. Entraînement de ventilateurs avec accouplement à frottement visqueux, se composant d'un carter d'accouplement (3) pourvu d'une chambre de travail (6) et d'une chambre d'alimentation (4) entre lesquelles circule un agent visqueux ainsi que d'un disque d'entraînement (11) tournant dans la chambre de travail (5) et relié à un arbre d'entraînement (12) et d'un ventilateur (1) relié au carter (3), caractérisé en ce qu'il est prévu dans la direction d'écoulement en arrière du ventilateur (1) un second ventilateur (2) pourvu d'un aubage orienté en sens inverse et monté coaxialement à l'arbre d'entraînement (12) en pouvant être enclenché par l'intermédiaire d'un autre accouplement (21) et d'une transmission (20) de manière que ce second ventilateur (2) tourne dans un sens de rotation opposé à celui du premier ventilateur (1).

2. Entraînement de ventilateurs selon la revendication 1, caractérisé en ce que les ventilateurs (1, 2) sont agencés comme des ventilateurs axiaux et en ce que le rapport entre les vitesses de rotation du second et du premier ventilateur est 1_{2/1} = n₂: n₁ = 1.

3. Entraînement de ventilateurs selon la revendication 1 ou 2, caractérisé en ce que le carter (3) de l'accouplement à frottement visqueux comporte un moyeu (13) et en ce que le second ventilateur (2) comporte un moyeu (16) et monté de façon tournante sur le moyeu (13).

4. Entraînement de ventilateurs selon la revendication 1, 2 ou 3, caractérisé en ce que le second ventilateur (2) peut être enclenché par l'intermédiaire d'une transmission à engrenages.

5. Entraînement de ventilateurs selon la revendication 4, caractérisé en ce que la transmission à engrenage est agencée comme une transmission à train planétaire, auquel cas il est prévu sur le carter d'accouplement (3, 13) de l'accouplement à frottement visqueux une roue dentée intérieure (17) et sur le moyeu (16) du second ventilateur (2) une roue dentée extérieure pourvue d'une denture intérieure, lesdites roues dentées étant en prise l'une avec l'autre par l'intermédiaire de pignons-satellites (19) qui sont disposés sur un porte-satellites (20), qui est monté coaxialement et de façon tournante sur l'arbre d'entraînement (12) et qui peut être freiné par l'intermédiaire du second accouplement (21).

6. Entraînement de ventilateurs selon la revendication 5, caractérisé en ce que le second accouplement (21) est agencé comme un frein électromagnétique qui s'appuie du côté du véhicule.

7. Entraînement de ventilateurs selon la revendication 1 , 2 ou 3, caractérisé en ce que la transmission est agencée comme une transmission à courroies, de préférence comme une transmission à courroies trapézoïdales ou courroies crantées et elle comporte deux entraînements à courroies (24, 25) décalés axialement l'un par rapport à l'autre et dont le premier (24) est relié au premier ventilateur (1) par l'intermédiaire d'une poulie (26) tandis que le second (25) est relié au second ventilateur (2) également par l'intermédiaire d'une poulie (31), ces entraînements à courroies pouvant être reliés l'un avec l'autre par l'intermédiaire d'un accouplement de commutation (30).

8. Entraînement de ventilateurs selon la revendication 7, caractérisé en ce que l'accouplement de commutation (30) est agencé comme un accouplement électro-magnétique, disposé à l'intérieur d'une poulie (29) du premier entraînement à courroies (24).

9. Entraînement de ventilateurs selon la revendication 7 ou 8, caractérisé en ce que le premier entraînement à courroies (24) actionne par l'intermédiaire d'un rouleau de renvoi (27) une poulie (29) disposée à l'extérieur du premier entraînement à courroies (24) et qui est située coaxialement à une autre poulie (28) du second entraînement à courroies (25) en pouvant être reliée à celle-ci par l'accouplement de commutation (30).

10. Entraînement de ventilateurs selon une des revendications précédentes, caractérisé en ce que le second ventilateur (2) est entraîné par l'intermédiaire d'un accouplement à frottement visqueux (32, 33) à limitation de couple, dont l'organe menant (33) est relié au moyeu (16) situé côté transmission et dont l'organe mené (32) est relié au moyeu (35) situé côté ventilateur.
